# EUROPEAN PATENT APPLICATION

(11) **EP 1 369 220 A1**
(43) Date of publication of application: **10.12.2003**
(21) Application number: 02712301.7
(22) Date of filing: 12.02.2002
(51) Int. Cl.: B29C 49/24, B32B 27/20, G09F 3/04

(54) **LABEL FOR IN-MOLD FORMING**

(30) Priority: 22.02.2001 JP 2001046324
(71) Applicant: Yupo Corporation, Tokyo 101-0062 (JP)
(72) Inventor: NISHIZAWA, Takatoshi; c/o Yupo Corporation, Kashima-gun, Ibaraki 314-0102 (JP); SHIINA, Masaki; c/o Yupo Corporation, Kashima-gun, Ibaraki 314-0102 (JP)
(74) Representative: VOSSIUS & PARTNER
(86) International application number: JP0201146
(87) International publication number: WO02066230

(57) **Abstract**

The object of the present invention is to provide a transparent label for in-mold forming which has excellent antistatic properties and excellent ink adhesion properties, and can undergo face printing in offset printing with sheets, can respond to a small lot order of labels and in short time limit of delivery, has excellent cutting of the labels, punching processing, and inserting properties into a mold after printing, and is fused firmly to a container without causing blisters.

The invention provides a label for in-mold forming, which is a non-stretched multi-layer film comprising at least two layers of a surface layer and a heat-sealing resin layer, or a non-stretched multi-layer film comprising at least three layers of a surface layer, a central layer, and a heat-sealing resin layer, wherein the surface layer is made of a thermoplastic resin composition containing a permanent antistatic agent and an inorganic fine powder and/or an organic filler and the center line average roughness of the surface layer is from 0.2 to 3 µm.

## Description

### Technical Field

The present invention relates to a label used for in-mold forming for manufacturing a label-stuck container by blow molding, where the label is set in a mold beforehand so that the printed face side of the label comes in contact with the wall of the mold and the parison of a melted thermoplastic resin is introduced into the mold, by injection molding of the melted thermoplastic resin, or by vacuum forming or air-pressure forming of the melted thermoplastic resin.

### Background Art

For the monolithic molding of a resin-molded container having a label attached, a blank or label is inserted into a mold beforehand, subsequently a container is formed in the mold through blow molding, differential pressure forming, foam molding, or the like, and painting of the container is carried out (See JP-A-58-69015 and EP-A-254,923). The labels for in-mold forming proposed so far include labels obtained by using, as base materials, non-stretched transparent films prepared from crystalline polypropylene, polyethylene, or the like by extrusion molding or calender forming, coating the base materials with solutions of low melting olefin resins such as an ethylene-vinyl acetate copolymer on a gravure coater, and then drying; and labels obtained by laminating low melting olefin resin films and the base materials with adhesives; or by direct laminating them by extrusion lamination.

However, the non-stretched transparent films thus prepared have insufficient antistatic properties and have a problem in feeding and removing of sheets on a printing machine when offset printing of the sheets is carried out. When migratory antistatic agents are incorporated into labels in order to impart antistatic performance, the labels not only have an insufficient antistatic effect in the long term, but have the problem of inferior adhesion of offset ink. Although transparent in-mold labels as described in Japanese Patent No. 2790197 have excellent adhesion to containers, the labels similarly have a problem in the feeding and removing of sheets in offset printing, as shown by tensile moduli as low as 2000-6000 kg/cm².

Accordingly, in order to manufacture a transparent label for in-mold forming so far, at least three steps consisting of a step of manufacturing a non-stretched film, a step of printing on the back of label by use of gravure ink or the like, and a step of coating, sticking, or extrusion laminating a heat-sealing agent on the printed ink are necessary, and as a result, the label have problems of taking many days for manufacture thereof, and being expensive.

The present invention aims at providing a transparent label for in-mold forming which can undergo face printing in offset printing with sheets, owing to excellent antistatic properties and excellent ink adhesion, and as a result can respond to a small lot label order and a short time limit of delivery, have excellent cutting, punching processing, or inserting properties into the mold after printing, and fuse firmly to a container without causing blisters.

### Disclosure of the Invention

The present inventors have intensively studied in order to solve these problems and as a result found that a thermoplastic resin composition forming a surface layer is allowed to contain a permanent antistatic agent and an inorganic fine powder and/or an organic filler and the surface roughness is kept in a particular roughness, and thereby the feeding and removing of sheets in offset printing is improved and adhesion of offset ink also is improved, thus having achieved the present invention.

That is, the present invention provides a transparent label for in-mold forming characterized in that in a non-stretched multi-layer film comprising at least two layers of a surface layer and a heat-sealing resin layer, the surface layer is made of a thermoplastic resin composition containing at least one of a permanent antistatic agent, an inorganic fine powder, and an organic filler; and the center line average roughness of the surface layer is from 0.2 to 3 µm. More preferably, the invention provides a transparent label for in-mold forming characterized in that the heat-sealing resin layer has a permanent antistatic agent contained in an ethylene resin.

### Brief Description of the Drawing

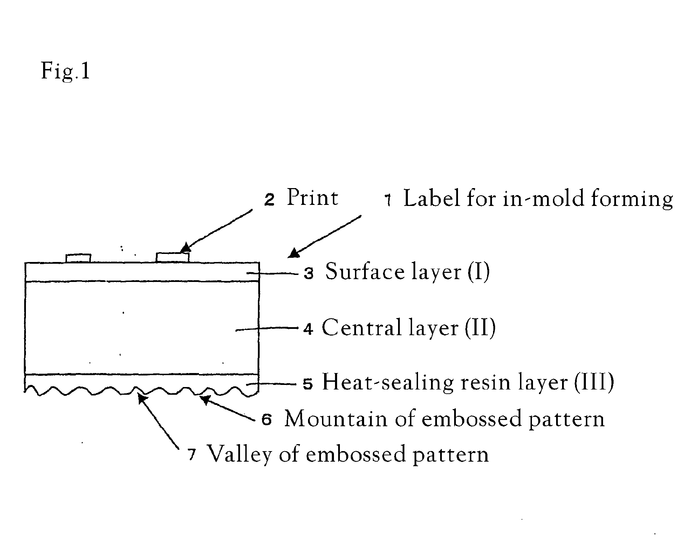

Fig. 1 is a sectional view of a label for in-mold forming of an embodiment of the present invention.

The reference symbols of the figure are as follows: 1. label for in-mold forming; 2. printing; 3. surface layer; 4. central layer; 5. heat-sealing resin layer; 6. embossed mountain pattern; and 7. embossed valley pattern.

### Best Mode for Carrying Out the Invention

### Structure of the Label for In-mold Forming:

The label for in-mold forming of the invention is illustrated in further detail.

Fig. 1 shows a schematic sectional view of a label for blow molding and in the figure, 1 is a label for in-mold forming, 2 is printing, 3 is a surface layer, 4 is a central layer, and 5 is a heat-sealing resin layer. Central layer 4 is provided as needed between surface layer 3 and heat-sealing resin layer 5. The heat sealing resin layer undergoes emboss processing on the surface to prevent blisters from developing upon in-mold forming.

### Surface Layer

### 1) Thermoplastic Resin

The materials of the surface layer of the invention include films of polyolefinic resins such as propylene resins, high-density polyethylene, medium-density polyethylene, linear low-density polyethylene, ethylene-vinyl acetate copolymers, ethylene-acrylic acid copolymers, ethylene-alkyl acrylate ester copolymers, ethylene-alkyl methacrylate ester copolymers (the carbon number of the alkyl group is 1-8), metal salts of ethylene-methacrylic acid copolymers, poly(4-methyl-1-pentene), and ethylene-cyclic olefin copolymers, polyethylene terephthalate resins, polyvinyl chloride resins, polyamide resins such as nylon-6, nylon-6, 6, nylon-6,10, nylon-6,12, ABS resins, ionomer resins, and the like. The materials are preferably thermoplastic resins having melting points ranging from 130 to 280°C, such as propylene resins, high-density polyethylene, polyethylene terephthalate resins, and the like. These resins can be used as mixtures of two or more thereof.

Of these materials, polyolefinic resins are preferably used. Of the polyolefinic resins, the propylene resins and high-density polyethylene are further preferably used in view of cost, water resistance, and chemical resistance.

Such propylene resins preferably used include propylene homopolymers (polypropylene) which are isotactic, syndiotactic, or have various degrees of stereoregularity, and copolymers of propylene with an α-olefin such as ethylene, 1-butene, 1-hexene, 1-heptene, and 4-methyl-1-pentene. These copolymers may be binary, ternary, or quaternary, and may be random copolymers or block copolymers. The contents of these propylene resins are from 40 to 94 weight percent and preferably from 30 to 90 weight percent.

### 2) Inorganic Fine Powder and Organic Filler

The kinds of inorganic fine powders and/or organic fillers contained in the surface layer are not particularly limited.

The inorganic fine powders include heavy calcium carbonate, precipitated calcium carbonate, calcined clay, talc, barium sulfate, diatomaceous earth, magnesium oxide, zinc oxide, titanium dioxide, silicon oxide, and the like. These powders may undergo a surface treatment with fatty acids and the like. Of these powders, heavy calcium carbonate, calcined clay, and talc are preferred in view of low prices and good formability.

The organic fillers include polyethylene terephthalate, polybutylene terephthalate, polyamide, polycarbonate, polyethylene naphthalate, polystyrene, melamine resins, polyethylene sulfite, polyimide, polyethyl ether ketone, polyether ether ketone, polyphenylene sulfite, poly-4-methyl-1-pentene, polymethylmethacrylate, copolymers of cyclicolefins, and copolymers of cyclicolefins and ethylene, which have melting points of from 120 to 300°C or glass transition temperatures of from 120 to 280°C. One kind selected from the aforesaid inorganic fine powders and/or organic fillers can be used singly or mixtures of two or more thereof may be used. The contents of the powders and/or fillers are from 1 to 20 weight percent and preferably from 2 to 15 weight percent.

### 3) Permanent Antistatic Agent

The permanent antistatic agents forming the surface layers can be exemplified by polyether ester amides as described in JP-A-58-118838, JP-A-1-163234, and the like. Aminocarboxylic acids or lactams having six or more carbon atoms or salts of diamines or dicarboxylic acids having six or more carbon atoms (i) which are a component of the polyether ester amides include aminocarboxylic acids such as ω-aminocaproic acid, ω-aminoenanthic acid, ω-aminocaprilic acid, ω-aminopergonic acid, ω-aminocapric acid, 11-aminoundecanoic acid, and 12-aminododecanoic acid, lactams such as caprolactam, enantholactam, caprylolactam, and laurolactam, and salts of diamines and dicarboxylic acids such as salts of hexamethylenediamine and adipic acid, salts of hexamethylenediamine and sebacid acid, and salts of hexamethylenediamine and isophthalic acid. Particularly, caprolactam, 12-aminododecanoic acid, and the salts of hexamethylenediamine and adipic acid are preferably used.

Poly(alkylene oxide) glycols (ii) which are a component of the polyether ester amides include polyethylene glycol, poly(1,2-propylene oxide) glycol, poly(1,3-propylene oxide) glycol, poly(tetramethylene oxide) glycol, poly(hexamethylene oxide) glycol, block or random copolymers of ethylene oxide and polypropylene oxide, block and random copolymers of ethylene oxide and tetrahydrofuran, and the like. Of this component, polyethylene glycol is particularly preferably used in view of its excellent antistatic properties. The number average molecular weights of the poly(alkylene oxide) glycols used are in the range of from 200 to 6000 and particularly from 250 to 4000. A molecular weight less than 200 causes the mechanical properties of the resulting polyether ester amides to deteriorate, and exceeding 6000 results in poor antistatic properties.

Dicarboxylic acids having four to 20 carbon atoms (iii) which are a component of the polyether ester amides include aromatic dicarboxylic acids such as terephthalic acid, isophthalic acid, phthalic acid, naphthalene-2, 6-dicarboxylic acid, naphthalene-2,7-dicarboxylic acid, diphenyl-4,4'-dicarboxylic acid, diphenoxyethane-dicarboxylic acid, and sodium 3-sulfoisophthalic acid, alicyclic dicarboxylic acids such as 1, 4-cyclohexane-dicarboxylic acid, 1, 2-cyclohexanedicaroxylic acid, and dicylcohexyl-4,4'-dicarboxylic acid, and aliphatic dicarboxylic acids such as succinic acid, oxalic acid, adipic acid, sebacic acid, and dodecanoic diacid (decanedicarboxylic acid). Particularly, terephthalic acid, isophthalic acid, 1,4-cyclohexanedicarboxylic acid, adipic acid, sebacic acid, and dodecanoic diacid are preferably used in view of their polymerizability, color tone, and physical properties.

Although poly(alkylene oxide) glycols (ii) and dicarboxylic acids (iii) react in a molar ratio of 1:1, the charge ratio of components (ii) and (iii) supplied varies depending upon the dicarboxylic acids used.

Poly (alkylene oxide) glycols (ii) and dicarboxylic acids (iii) which are the components of polyether esters are the components of polyether ester amides and are used in the range of from 90 to 10 weight percent. Exceeding 90 weight percent results in a deterioration of the mechanical properties of the polyether ester amides, and a ratio less than 10 weight percent causes the antistatic properties to deteriorate.

The procedures for polymerization of the polyether ester amides are not particularly limited, and for example, the following procedures are adopted.
(A) A polyamide prepolymer having carboxylic groups at both terminals is prepared by reaction between an aminocarboxylic acid or a lactam (i) and a dicarboxylic acid (iii) and then a poly(alkylene oxide) glycol (ii) is allowed to react with the polyamide prepolymer under reduced pressure.
(B) The respective compounds of the aforesaid components (i), (ii), and (iii) are introduced into a reaction vessel and allowed to react in the presence or absence of water at a high temperature under pressure to prepare a polyamide prepolymer having a terminal carboxylic acid, and thereafter polymerization is promoted at ordinary pressure or under reduced pressure.
(C) The respective compounds of the aforesaid components (i), (ii), and (iii) are simultaneously introduced into a reaction vessel, melted, and mixed, and then polymerization is promoted at once in high vacuum.

Polymerization catalysts also are not limited, and for example, antimony catalysts such as antimony trioxide, tin catalysts such as monobutyltin oxide, titanium catalysts such as tetrabutyl titanate, and zirconate catalysts such as tetrabutyl zirconate can be used singly or as mixtures of two or more thereof.

The contents of the polyether ester amides (b) in the components of the surface layer in general are from 5 to 40 weight percent and preferably from 6 to 30 weight percent. The content of the above component (b) not reaching the range results in insufficient antistatic properties, and exceeding the range causes the strength of the label surface to deteriorate.

In order to more surely develop the antistatic properties of the polyether ester amides, it is possible to add metal salts such as sodium chlorate, sodium perchlorate, calcium hydroxide, magnesium hydroxide, zirconium hydroxide, calcium oxide, manganese oxide, and sodium phosphate or ionomers containing zinc or sodium as a counter ion (ionic polymers where metal ions having valences of 1 to 3 are added to copolymers of ethylene or propylene and an α,β-unsaturated carboxylic acid derivative), preferably in the range of from 0.01 to 5 weight percent to the polyether ester amides. Moreover, in order to increase the compatibility of the polyether ester amides with the thermoplastic resins to improve the mechanical strength, modified polyolefins such as maleic acid-modified polypropylene and maleic acid-modified polyethylene can be added, preferably in the range of from 0.5 to 5 weight percent.

### Central Layer

In the non-stretched multi-layer film of the invention, a central layer can be provided between the surface layer and heat-sealing resin layer. The thermoplastic resins used for the surface layer can be used as materials forming the central layer. Of those resins, polyolefinic resins are preferred. Furthermore, the preferred polyolefinic resins are propylene resins and/or ethylene resins (high-density polyethylene, medium-density polyethylene, straight-chain linear low-density polyethylene, etc.) in view of their cost, water resistance, and chemical resistance. In the case of the propylene resins, isotactic propylene having a high stereoregularity, which is a propylene homopolymer, is preferred in view of its high rigidity.

For the purpose of improving rigidity and transparency, it is more preferable to add nucleating agents to these thermoplastic resins. The nucleating agents used appropriately include all benzylidene sorbitol-series, carboxylic acid-series, inorganic phosphoric salt-series, and inorganic agents such as 1,3,2,4-dibenzylidene sorbitol, 1,3,2,4-di(p-methylbenzylidene) sorbitol, 1,3-o-methylbenzylidene, 2,4-p-methylbenzylidene, aluminum p-t-butylbenzoate, sodium bis(4-t-butylphenyl) phosphate, sodium 2,2'-ethylidene-bis(4,6-di-t-butylphenyl) phosphate, aluminum oxide, Kaolin clay, and talc, and the contents of these agents are in the range of from 0.001 to 1 weight percent.

### Heat-sealing Resin Layer

### 1) Ethylene Resin

The ethylene resins forming the heat-sealing resin layers preferably are polyethylene resins having melting points of from 50 to 130°C including high-density polyethylene having a density of from 0.940 to 0.970 g/cm³, low-density or medium-density high-pressure polyethylene having a density of from 0.900 to 0.935 g/cm³, linear low density polyethylene having a density of from 0.880 to 0.940 g/cm³, ethylene-vinyl acetate copolymers, ethylene-acrylic acid copolymers, ethylene-alkyl acrylate ester copolymers, ethylene-alkyl methacrylate ester copolymers (The alkyl groups have from one to eight carbon atoms), and metal salts of ethylene-methacrylic acid copolymers (Zn, Al, Li, K, Na, etc.).

High-pressure polyethylene having a high crystallinity of from 10 to 60 percent (X-ray microscopy) and a number average molecular weight of from 10,000 to 40,000 and the linear low density polyethylene are further preferred. Of these, the linear low density polyethylenes prepared by copolymerizing from 40 to 98 weight percent of ethylene and from 60 to 2 weight percent of α-olefin having from three to 30 carbon atoms in the presence of a metallocene catalyst, particularly metallocene-Almochisan catalyst, or for example, a catalyst consisting of a metallocene compound as disclosed in WO 92/01723, and a compound forming a stable anion by reacting with the metallocene compound, are most suitable in view of their adhesion to containers. These polyolefinic resins may be single or mixtures of two or more thereof and the contents thereof are from 60 to 95 weight percent and preferably from 70 to 90 weight percent.

### 2) Permanent Antistatic Agent

The permanent antistatic agents forming the heat-sealing resin layers include the same agents as the polyether ester amides contained in the surface layers. The contents of the agents are from 5 to 40 weight percent and preferably from 10 to 30 weight percent.

### Arbitrary Components

Other known resin additives can be arbitrarily added to the surface layer, central layer, and heat-sealing resin layer as long as the desired antistatic properties, ink adhesion, heat-sealing properties, and the like are not disturbed. The additives include slip agents such as aliphatic amides, anti-blocking agents, dyes, plasticizers, mold release agents, antioxidants, flame retardants, ultraviolet absorbers, and the like.

### Thickness

The thickness of the surface layer of the invention is in the range of from 1 to 40 µm and preferably from 2 to 20 µm. A thickness of less than 1 µm results in deterioration in the antistatic properties and ink adhesion and exceeding 30 µm causes the opacity to decrease. The thickness of the central layer is in the range of from 0 to 200 µm and preferably from 0 to 100 µm. The thickness of the heat-sealing resin layer is in the range of from 1 to 30 µm and preferably from 2 to 20 µm. A thickness of less than 1 µm tends to cause the fusing strength to containers to decrease and cause blisters to develop, and exceeding 30 µm invites curling of the labels and makes offset printing with sheets and fixing of the labels to a mold difficult. A total thickness of less than 30 µm causes the stiffness to decrease and the offset printing with sheets to deteriorate, and exceeding 200 µm promotes deterioration in the strength of a bolt of the terminal to which the label is stuck, causing the falling resistance to deteriorate.

### Center Line Average Roughness

It is preferable that the surface layer of the invention is roughened so that the center line average roughness falls in the range of from 0.2 to 3 µm. The roughening of the surface can be carried out by transferring a textured pattern applied to the surface of a casting roll when a resin composition extruded from a die is cooled on the casting roll, or by pressing a textured roll having a center line average roughness of from 0.5 to 5 µm against an extruded sheet while re-heating after cooling the cast.

By roughening the surface layer so that the center line average roughness falls in the range of from 0.2 to 3 µm, the ink adhesion can be improved after printing with UV ink. A center line average roughness of less than 0.2 µm results in inferior ink adhesion. Exceeding 3 µm brings about so large an unevenness to the surface layer so as to give a print having a rough appearance.

### Emboss Processing

As described above, the heat-sealing resin layer of the label can undergo emboss processing to prevent blisters from developing upon blow molding as described in JP-A-2-84319 and JP-A-3-260689. The embossed pattern preferably depends upon emboss processing of from 5 to 300 lines per 2.54 cm, and any patterns of the gravure type, pyramid type, diagonal type, and reverse types thereof can be transferred. However, it is more preferable to process the heat-sealing resin layer so as to transfer the gravure type pattern to the layer by use of a roll on which the reverse gravure type pattern is carved. The processing can be carried out upon cooling a cast, or can be carried out while re-heating after cooling the cast as described above.

### Printing

It is preferable that these labels for in-mold forming are subjected to surface treatments such as a corona discharge treatment and a flame plasma treatment to improve the printability of the surface layers beforehand.

Printing is carried out through gravure printing, offset printing (oil, UV), flexographic printing, letterpress printing (UV), screen printing, ink jet printing, and electrophotographic printing, and a bar code, a manufacturer, a distributor, character, a trade name, usage, and the like are written in.

Label (1) thus printed undergoes punching processing to cut out a label having the necessary shape and size. This label for in-mold forming is manufactured as a blank surrounding the side of a cup-like container in general, or as a label stuck on the face and/or back of a bottle container in blow molding.

### Ink Adhesion

Printing was carried out by use of UV ink "Bestcure 161S" (Trade name, Manufactured by T&K TOKA Co., Ltd.) at an atmosphere of 25°C-40%RH, "Cellotape" (Trade name, Manufactured by Nichiban Co., Ltd.) was stuck to the printed surface immediately after UV irradiation, and the Cellotape was peeled away on an Internal Bond Tester (Produced by Kumagaya Riki Kogyo Co., Ltd.), thus to measure the ink adhesion strength (kg^{·}cm) . The ink adhesion strength is 1 kg^{·}cm or more and preferably 2 kg^{·}cm or more. A strength less than 1 kg^{·}cm shows the existence of resistance to peeling, but causes almost all ink to peel off, which is a problem in practical use.

In order to promote the ink adhesion, it is preferable that the surface layer contains thermoplastic resins having polar groups such as ethylene-vinyl acetate copolymers, ethylene-acrylic acid copolymers, ethylene-alkyl acrylate ester copolymers, ethylene-alkylmethacrylate ester copolymers (The alkyl group has from one to eight carbon atoms), and metal salts of ethylene-methacrylic acid copolymers, as well as roughening of the surface layer.

### In-mold Forming

The label for in-mold forming is set so that the printed surface of the label comes in contact with the inside of the lower female mold for differential pressure forming and fixed to the inside wall of the mold through evacuation, and then a molten resin sheet of a container-molding material is attached to an upper part of the lower female mold and undergoes differential pressure forming according to an ordinary procedure to form a label-stuck container where the label is integrally fused to the outer wall of the container. Although the differential pressure forming can be adopted both in vacuum forming and air-pressure forming, both are used together in general, and moreover differential pressure forming by use of plug-assist forming is preferred.

Furthermore, this label is particularly suitable for use as an in-mold label for blow molding where a melted resin parison is pressed against the inside wall of the mold with compressed air.

In the label-stuck container thus prepared, label (1) is fixed to the inside of a mold, and then the label and resin container are monolithically formed. Accordingly, label (1) is not deformed, the bonding strength between the container proper and label (1) is firm, and no blisters develop, thereby providing a container decorated with the label and having a good appearance.

### Examples

The present invention is further specifically illustrated below through examples and comparative examples.

### [I] Methods of Measurement of Physical Properties and Methods of Evaluation

The measurement of physical properties and the evaluation in examples and comparative examples were carried out according to the following methods.

### (1) Measurement of Physical Properties:

(a) MFR: according to JIS-K-7210,
(b) Density: according to JIS-K-7112,
(c) Opacity: According to JIS-P-8138,
{d} Surface Resistivity: measured according to JIS-K-6911 at an atmosphere of 23°C-50%RH, and
(e) Center Line Average Roughness: Ra was measured according to JIS-0601 on Surfcorder SE-30 produced by Kosaka Kenkyusho Co., Ltd.

### (2) Offset Printing

(f) Feeding and removing of sheets: By use of a Dia II type printer produced by Mitsubishi Heavy Industries, Ltd. and UV ink "Bestcure 161S" (Trade name, Manufactured by T&K TOKA Co., Ltd.), 1000 sheets of a half-*kiku* size (636 mm × 470 mm) were continuously printed at a speed of 7000 sheets/hr at the atmosphere of 25°C-40%RH. The number of times at which the machine stopped owing to problems (feeding of two sheets and slippage of sheets) with the sheet feeding unit was evaluated according to the following standards.
○○: The machine did not stop at all.
○: The machine stopped one to three times.
×: The machine stopped more than four times.
(g) Ink Adhesion:
"Cellotape" (Trade name, Manufactured by Nichiban Co., Ltd.) was stuck to a printed surface immediately after UV irradiation, and the ink adhesion strength (kg^{·}cm) was measured with an Internal Bond Tester (Produced by Kumagaya Riki Kogyo Co., Ltd.) by peeling away the Cellotape. The resulting strength and judgement on practical use were evaluated according to the following standard.

| | |
|---|---|
| 2 kg^{·}cm or more | ○○: Ink did not peel away |
| 1-2 kg^{·}cm or less | ○: Ink peeled away slightly, but is no problem in practical use. |
| 0.5-1 kg^{·}cm or less | Δ: Ink showed some resistance to peeling, but almost all ink peeled away which is a problem in practical use. |
| 0.5 kg^{·}cm or less | ×: All ink peeled away, hardly had resistance to peeling, and cannot be practically used. |

### (3) In-Mold Forming:

By use of a blow molding machine (V-50 type) produced by Plako Co., Ltd. and an automatic label supplier produced by Pentel Co. , Ltd. a label for in-mold forming having undergone punching processing (width 70 mm, length 90 mm) was fixed to a split (volume: 800 lm) for blow molding so that the printed side came to contact with the mold through evacuation, and a parison of high-density polyethylene ("Novatec PE HB330", Manufactured by Nippon Polychem Co. , Ltd., Melting point 133°C) was melted at 200°C and extruded. Subsequently, after the splits were clamped, compressed air of 4.5 kg/cm² was supplied to the parison, the parison is expanded and allowed to adhere to the splits to form a container and simultaneously fuse with the label for in-mold forming, and subsequently the splits were cooled and then opened to take out a label-stuck hollow container.
(h) Occurrence of Blisters:
   Ten containers were continuously manufactured through the in-mold forming. Examples where the blisters did not develop at all were graded o and examples where the blisters developed one time or more were graded ×.
(i) Fusing Strength of Label to Container

A label stuck to a container through the blow molding was cut off in 15 mm width and the bonding strength between the label and the container was measured through T-letter peeling by use of a tensile tester "Autograph AGS-D type" produced by Shimazu Corp. at a tensile speed of 300 mm/min. Standards of judgment on use of labels are as follows:
400 g/15mm or more: Strength is no problem in practical use,
200-400 g/15mm: Bonding strength is slightly weak, but strength is no problem in practical use, and
200 g/15mm or less: Strength is a problem in practical use.

### [II] Examples of Experiments

### [Preparation of Polyether Ester Amide]

In a reactor equipped with helical-ribbon agitating blades, 55 parts of 12-aminododecanoic acid, 40 parts of polyethylene glycol having a number average molecular weight of 1000, and 15 parts of adipic acid were placed together with 0.2 part of "Irganox 1098" (antioxidant) and 0.1 part of antimony trioxide catalyst, the atmosphere was replaced by nitrogen, the mixture was heated and refluxed at 260°C for 60 min to prepare a transparent uniform solution, and subsequently the solution underwent a polymerization under conditions of 260°C and 0.5 mmHg or less for 4 hr to prepare a transparent viscous polymer. The polymer was discharged onto a cooling belt in a string state, and pelletized to prepare pellet-like polyether ester amide (b1).

In the reactor used in the preparation of polyether ester amide (b1), 50 parts of ε-caprolactam, 40 parts of polyethylene glycol having a number average molecular weight of 1000, and 10 parts of dodecanedicarboxylic acid, 0.2 part of "Irganox 1098", and 0.02 part of antimony trioxide were placed together, the atmosphere was replaced by nitrogen, the mixture was heated and stirred at 260°C for 60 min to prepare a transparent uniform solution, water in the gas phase in the reactor was removed by reducing pressure to 500 mmHg, and then 0.08 parts of tetrabutyl zirconate was added. Subsequently, polymerization was carried out under conditions of 260°C and 0.5 mmHg or less for 3hr to prepare a transparent, viscous polymer. Thereafter, polyether ester amide (b2) was prepared according to the same procedure as in (b1).

### [Preparation Examples of Labels]

### (Example 1)

(1) Resin composition (A) comprising 70 weight percent of a propylene homopolymer (Trade name "Novatec PP MA-4", Manufactured by Nippon Polychem Co., Ltd., Melting point 164°C), 5 weight percent of a calcium carbonate powder having an average particle size of 1.5 µm, 19 weight percent of polyether ester amide (b1) prepared in the aforesaid preparation example, 1 weight percent of maleic acid-modified polypropylene (Trade name "MODIC P-300M", Manufactured by Mitsubishi Chemical Corp.), and 5 weight percent of an ethylene-vinyl acetate copolymer (Trade name "Novatec EVA LV440, Manufactured by Nippon Polychem Co., Ltd.) was melted and kneaded in an extruder set at 230°C.
(2) A propylene homopolymer (Trade name "Novatec PPMA-4", Manufactured by Nippon Polychem Co., Ltd., Melting point 164°C) (B) was melted and kneaded in an extruder set at 240°C.
(3) Resin composition (C) comprising 70 weight percent of an ethylene-1-hexene copolymer prepared from ethylene and 1-hexene in the presence of a metallocene catalyst and having an MFR of 18 g per 10 min, a density of 0.898 g/cm³, and a melting point of 90°C (1-hexene content 22 weight percent, crystallinity 30, a number average molecular weight 23,000) and 30 weight percent of high-pressure low-density polyethylene having an MFR of 4 g per 10 min, a density of 0.92 g/cm³, and a melting point of 110°C was melted and kneaded in an extruder set at 200°C.
(4) The resin compositions melted and kneaded in the aforesaid (1) to (3) were introduced into a die having a three-layermulti-manifold, laminated so as to form (A) / (B) / (C) layers in the die, and extruded in a sheet so that the resin composition (A) contacted with a casting roll having set at 50°C and having a center line average roughness of 1 µm, and the sheet was cooled to a temperature of 60°C. The revolution rate of the extruder was controlled so that the thicknesses (A)/(B)/(C) were 15µm/70µm/15µm, respectively.
(5) Subsequently, the sheet was allowed to pass between a metallic emboss roll (250 lines per inch, reverse gravure type) and a rubber roll, and underwent emboss processing of patterns at 0.1-mm intervals on the heat-sealing resin layer side, was trimmed, lugs were slit, a discharge treatment of 60 W^{·}min/m² was carried out on the surface layer side on an AGI-201 type discharge-treating apparatus produced by Kasuga Electric Works Ltd., as a high-frequency source by use of a four-mountain electrode as a discharge electrode, and the resulting sheet was wound up. The sheet was cut into 636 mm × 470 mm, and the printability and in-mold forming were evaluated. The results are shown in Table 1.

### (Examples 2 to 5 and Comparative Example 1)

In-mold labels were obtained similarly to Example 1 except that the compositions of the respective layers were changed as described in Table 1. The results of the evaluations are shown in Table 1.

### (Comparative Examples 2 to 6)

Similarly, in-mold labels were obtained according to the compositions as described in Table 1 except that specular gloss (center line average roughness 0.05 µm) was used in the surface of the casting roll. In Comparative Example 6, the heat-sealing resin layer underwent no emboss processing.

**Table 1-1**

| Compositions | | | | | | | |
|---|---|---|---|---|---|---|---|
| | | | (Example) | | | | |
| | | | 1 | 2 | 3 | 4 | 5 |
| Surface layer | Thermoplastic resin | Polypropylene [MA-4] | 70 | 75 | - | 70 | 70 |
| | | High-density polyethylene [HY540] | - | - | 75 | - | - |
| | | Maleicacid-modified polypropylene | 1 | 1 | - | 1 | 1 |
| | | Maleicacid-modified polyethylene | - | - | 1 | - | - |
| | | Ethylene-vinyl acetate copolymer | 5 | - | - | 5 | 5 |
| | Permanent Antistatic agent | Polyether ester amide (b1) | 19 | - | 19 | 19 | 19 |
| | | Polyether ester amide (b2) | - | 19 | - | - | - |
| | Inorganic fine powder | Calcium carbonate | 5 | 5 | 5 | 5 | 5 |
| | Migratory antistatic agent | [Electrostripper TS-5] | - | - | - | - | - |
| Central layer | Thermoplastic resin | Polypropylene [MA-4] | 100 | 100 | - | 100 | - |
| | | Polypropylene [FY-6C] | - | - | - | - | 100 |
| | | Polypropylene [FL-25] | - | - | - | - | - |
| | | High-density polyethylene [HY540] | - | - | 100 | - | - |
| Heat-sealing resin layer | Thermoplastic resin | Ethylene-1-hexene Copolymer | 70 | 70 | 70 | 62.9 | 62.9 |
| | | High-pressure low-density polyethylene | 30 | 30 | 30 | 27 | 27 |
| | Permanent Antistatic agent | Polyether ester amide (b1) | - | - | - | 10 | 10 |
| | | Metal salt | - | - | - | 0.1 | 0.1 |
| | Migratory antistatic agent | [Electrostripper TS-5] | - | - | - | - | - |
| | (Embossing processing) | | done | done | done | done | done |
| High-density polyethylene [HY540]: Manufactured by Nippon Polychem Co., Ltd., Trade name | | | | | | | |
| Maleic acid-modified polyethylene : Manufactured by Mitsubishi Chemical Corp., MODIC L-400H, Trade name | | | | | | | |
| [Electrostripper TS-5]: Manufactured by Kao Corp., Trade name | | | | | | | |
| Polypropylene [FY-6C]: Nippon Polychem Co., Ltd., Trade name, Propylene homopolymer | | | | | | | |
| Polypropylene [FL-25]: Nippon Polychem Co., Ltd., Trade name, Propylene-ethylene random copolymer | | | | | | | |
| Metal salt: Sodium phosphate | | | | | | | |

**Table 1-2**

| Compositions | | | | | | | | |
|---|---|---|---|---|---|---|---|---|
| | | | (Comparative Example) | | | | | |
| | | | 1 | 2 | 3 | 4 | 5 | 6 |
| Surface Layer | Thermoplastic | Polypropylene [MA-4] | 100 | 70 | 70 | 93 | 93 | 93 |
| | Resin | High-density Polyethylene [HY540] | - | - | - | - | - | |
| | | Maleic acid-modified polypropylene | - | 1 | 1 | - | - | - |
| | | Maleic acid-modified polyethylene | - | - | - | - | - | - |
| | | Ethylene-vinyl acetate copolymer | - | 5 | 5 | - | - | - |
| | Permanent Antistatic agent | Polyetherester amide (b1) | - | 19 | 19 | - | - | - |
| | | polyetherester amide (b2) | - | - | - | - | - | - |
| | Inorganic fine powder | Calcium carbonate | - | 5 | 5 | 5 | 5 | 5 |
| | Migratory antistatic agent | [Electrostlipper TS-5] | - | - | - | 2 | 2 | 2 |
| Central layer | Thermoplastic resin | Polypropylene [MA-4] | 100 | 100 | - | 100 | 100 | 100 |
| | | Polypropylene [FY-6C] | - | - | - | - | - | - |
| | | Polypropylene [FL-25] | - | - | 100 | - | - | - |
| | | High-density polyethylene [HY540] | - | - | - | - | - | - |
| Heat-sealing resin layer | Thermoplastic resin | Ethylene-1-hexene copolymer | 70 | 70 | 70 | 70 | 68 | 70 |
| | | High-pressure low-density polyethylene | 30 | 30 | 30 | 30 | 30 | 30 |
| | Permanent Antistatic agent | Polyetherester amide (b1) | - | - | - | - | - | - |
| | | Metal salt | - | - | - | - | - | - |
| | Migratory antistatic agent | [Electrostripper TS-5] | - | - | - | - | 2 | - |
| | (Embossing processing) | | done | done | done | done | done | done |
| High-density polyethylene [HY540]: Manufactured by Nippon Polychem Co., Ltd., Trade name. | | | | | | | | |
| Maleic acid-modified polyethylene: Manufactured by Mitsubishi Chemical Corp., [MODIC L-400H], Trade name. | | | | | | | | |
| [Electrostripper TS-5] : Manufactured by Kao Corp., Trade name. | | | | | | | | |
| Polypropylene [FY-6C]: Manufactured by Nippon Polychem Co., Ltd., Trade name, Polypropylene homopolymer. | | | | | | | | |
| Polypropylene [FL-25]: Manufactured by Nippon Polychem Co., Ltd., Trade name, Propylene-ethylene random copolymer. | | | | | | | | |
| Metal salt: Sodium phosphate. | | | | | | | | |

**Table 1-3**

| Evaluations | | | | | | |
|---|---|---|---|---|---|---|
| | | (Example) | | | | |
| | | 1 | 2 | 3 | 4 | 5 |
| Center line average roughness | Surface layer side | 0.8 | 0.9 | 1.1 | 0.8 | 0.8 |
| Opacity | | 11 | 12 | 19 | 12 | 11 |
| Modulus in tension | Lengthwise | 15000 | 15000 | 16000 | 15000 | 19000 |
| | Crosswise | 15000 | 15000 | 16000 | 15000 | 19000 |
| Surface resistibility | Surface layer side | 2×10¹² | 3×10¹² | 8×10¹¹ | 2×10¹² | 2×10¹² |
| | Heat-sealing resin layer side | 1×10¹⁵ | 1×10¹⁵ | 1×10¹⁵ | 7×10¹¹ | 7×10¹¹ |
| Feeding and removing of sheets in UV offset printing | | ○ | ○ | ○ | ○○ | ○○ |
| Ink adhesion in UV offset printing | | ○○ | ○ | ○ | ○○ | ○○ |
| Occurrence of blisters | | ○ | ○ | ○ | ○ | ○ |
| Bonding strength to container | | 450 | 450 | 440 | 420 | 480 |

**Table 1-4**

| Evaluations | | | | | | | |
|---|---|---|---|---|---|---|---|
| | | (Comparative Example) | | | | | |
| | | 1 | 2 | 3 | 4 | 5 | 6 |
| Center line average roughness | Surface layer side | 0.8 | 0.15 | 0.15 | 0.15 | 0.15 | 0.15 |
| Opacity | | 5 | 11 | 10 | 11 | 12 | 12 |
| Modulus in tension | Lengthwise | 15000 | 15000 | 6000 | 15000 | 15000 | 15000 |
| | Crosswise | 15000 | 15000 | 6000 | 15000 | 15000 | 15000 |
| Surface resistibility | Surface layer side | 1×10¹⁵ | 2×10¹² | 2×10¹² | 4×10¹¹ | 4×10¹¹ | 4×10¹¹ |
| | Heat-sealing resin layer side | 1×10¹⁵ | 1×10¹⁵ | 1×10¹⁵ | 1×10¹⁵ | 7×10¹¹ | 1×10¹⁵ |
| Feeding and removing of sheets in UV offset printing | | × | ○ | × | ○ | ○○ | ○ |
| Ink adhesion in UV offset printing | | Δ | Δ | Δ | × | × | × |
| Occurrence of blisters | | ○ | ○ | ○ | ○ | × | × |
| Bonding strength to container | | 460 | 450 | 460 | 450 | 80 | 230 |

Although the present invention has been illustrated in detail with reference to a particular mode for carrying out the invention, it is apparent to persons concerned in the industry to be able to make alterations or modifications in various ways without deviation from the spirit and scope of the invention.

This application is based on an application of Japanese Patent filed on February 22, 2001 (Application Number 2001-046324) and the contents are incorporated by reference in this application.

### Industrial Applicability

The present invention enables the face printing in the offset printing with sheets and as a result, can provide transparent labels for in-mold forming which can respond to an order of a small lot of labels and in a short time limit of delivery, have excellent cutting, punching processing, and inserting properties into the mold after printing, and are fused firmly to a container without causing blisters.

## Claims

1. A label for in-mold forming, which is a non-stretched multi-layer film comprising at least two layers of a surface layer and a heat-sealing resin layer, wherein the surface layer is made of a thermoplastic resin composition containing at least one of an inorganic fine powder and an organic filler, and a center line average roughness of the surface layer is from 0.2 to 3 µm.

2. The label as described in claim 1, wherein an ink adhesion strength of the surface layer is 1 kg^{·}cm or more.

3. The label as described in claims 1 or 2, wherein an opacity of the multi-layer film is from 5 to 30 percent.

4. The label as described in any of claims 1 to 3, wherein the surface layer is made of a resin composition comprising:
Component A: Polyolefinic resin
40-94 weight percent
Component B: Permanent antistatic agent
5-40 weight percent
Component C: At least one of an inorganic fine powder and an organic filler
1-20 weight percent

5. The label as described in any of claims 1 to 4, wherein the heat-sealing resin layer is made of a resin composition comprising:
Component a: Ethylene resin
60-95 weight percent
Component b: Permanent antistatic agent
5-40 weight percent

6. The label as described in any of claims 1 to 5, wherein the permanent antistatic agent contains a polyether ester amide as a main component.

7. The label as described in any of claims 1 to 6, wherein the surface layer is pressed against a textured roll to roughen the surface.

8. The label as described in any of claims 1 to 7, wherein the surface layer is pressed against a textured roll having a center line average roughness of from 0.5 to 5 µm to roughen the surface.

9. The label as described in any of claims 1 to 8, wherein the heat-sealing resin layer undergoes emboss processing on the surface.

10. The label as described in any of claims 1 to 9, wherein the multi-layer film has moduli of tension of from 8000 to 40, 000 kgf/cm² in both lengthwise and crosswise.

11. The label as described in any of claims 1 to 10, wherein the multi-layer film is made of three layers and the central layer contains at least one of a propylene resin and an ethylene resin.

12. The label as described in any of claims 5 to 11, wherein the ethylene resin of the Component a has a crystallinity of from 10 to 60 percent, a number average molecular weight of from 10,000 to 40,000, and a melting point of from 50 to 130°C.
